# EUROPEAN PATENT SPECIFICATION

(11) **EP 3 225 866 B1**
(45) Date of publication and mention of the grant of the patent: **01.05.2019**
(21) Application number: 17160735.1
(22) Date of filing: 14.03.2017
(51) Int. Cl.: F16D 13/50, F16D 13/69, F16D 13/58, F16D 13/38, F16D 13/70

(54) **MULTI-PLATE CLUTCH**
MEHRPLATTEN-KUPPLUNG
EMBRAYAGE MULTI-PLAQUE

(30) Priority: 28.03.2016 JP 2016063611
(43) Date of publication of application: 04.10.2017
(73) Proprietor: AISIN SEIKI KABUSHIKI KAISHA, Aichi 448-8650 (JP)
(72) Inventor: SAITO, Shun, Kariya-shi, Aichi 448-8650 (JP)
(74) Representative: Kramer Barske Schmidtchen Patentanwälte PartG mbB

(56) References cited:
- DE-A1- 10 218 365
- DE-A1-102011 018 890
- DE-A1-102014 211 884
- GB-A- 2 176 548
- US-A- 4 558 771
- US-A- 6 035 987

## Description

### TECHNICAL FIELD

This disclosure relates to a multi-plate clutch having a plurality of friction couplers.

### BACKGROUND DISCUSSION

In the related art, a multi-plate clutch has been used in order to ensure large torque capacity in a limited clutch space. The multi-plate clutch has a plurality of friction couplers. For example, a clutch having two friction couplers is called a twin clutch. Hereinafter, the multi-plate clutch used in the related art will be described as an example of the twin clutch.

According to the multi-plate clutch (twin clutch) in the related art, the two friction couplers are disposed across an intermediate plate between a flywheel and a pressure plate. A torque is transmitted from the flywheel to a clutch disc via the two friction couplers. It is important for this multi-plate clutch (twin clutch) to properly control a position or a mobile characteristic of the intermediate plate disposed between the two friction couplers. For example, in a state where the clutch is disengaged, it is necessary to hold the intermediate plate at an intermediate position between the flywheel and the pressure plate. The reason is that a drag torque is generated if the intermediate plate is deviated from the intermediate position and comes into contact with one of the friction couplers.

Therefore, in the related art, the twin clutch has been proposed in which the flywheel and the intermediate plate are coupled to each other using a strap plate, and in which a coil spring brought into a compressed state is disposed between the pressure plate and the intermediate plate (refer to JP H10-103371A). According to the twin clutch in the related art, in a state where the clutch is engaged, the strap plate applies a biasing force to the intermediate plate in a direction away from the flywheel. The coil spring applies a biasing force to the intermediate plate in a direction approaching the flywheel (direction opposite to the strap plate). A spring constant of the coil spring is substantially the same as a spring constant of the strap plate. Therefore, when the clutch is disengaged, the intermediate plate is disposed at the intermediate position between the pressure plate and the flywheel.
DE 102 18 365 A1 discloses another multi-plate clutch comprising a flywheel, a pressure plate, and an intermediate plate.

However, according to the multi-plate clutch in the related art, as a configuration of disposing the intermediate plate at the intermediate position between the pressure plate and the flywheel, two elastic members such as a strap plate and a coil spring are used, thereby causing a disadvantage in that the number of components increases. The multi-plate clutch in the related art employs the coil spring. Consequently, there is another disadvantage in that assembly workability becomes poor when the coil spring brought into a compressed state is disposed between the pressure plate and the intermediate plate.

Thus, a need exists for a multi-plate clutch which can reduce the number of components and which can improve assembly workability.

### SUMMARY

A multi-plate clutch according to an aspect of this disclosure is configured according to claim 1.

According to this configuration, two elastic portions (the first elastic portion and the second elastic portion) are disposed in a single elastic member. In a state where a clutch is disengaged, the elastic biasing force acting in the direction away from the flywheel is applied to the intermediate plate from the first elastic portion of the elastic member, and the elastic biasing force acting in the direction approaching the flywheel is applied to the intermediate plate from the second elastic portion of the elastic member. In this way, the single elastic member enables a position of the intermediate plate to be held at an intermediate position between the flywheel and the pressure plate, and can prevent a drag torque from being generated. Therefore, compared to a case of using two different elastic members (a strap plate and a coil spring) as in the related art, the number of components can be reduced, and assembly workability is improved.

In the multi-plate clutch according to the aspect of this disclosure, materials of the first elastic portion and the second elastic portion may be the same as each other.

According to this configuration, since the first elastic portion and the second elastic portion have the same material, there is no difference caused by thermal influence (setting difference or elastic property difference). Therefore, even in an environment having a thermal change, the position of the intermediate plate can be held at the intermediate position between the flywheel and the pressure plate. Accordingly, it is possible to prevent the drag torque from being generated.

In the multi-plate clutch according to the aspect of this disclosure, the elastic member may be configured to include a leaf spring.

According to this configuration, since the elastic member is configured to include the leaf spring, compared to a case where the elastic member is configured to include a coil spring, it is possible to shorten a dimension in an axial direction of the multi-plate clutch. Therefore, the number of friction surfaces can be increased, and torque capacity can be enlarged even in a limited clutch space.

In the multi-plate clutch according to the aspect of this disclosure, a plurality of the intermediate plates may be disposed between the flywheel and the pressure plate, and the clutch disc may have a third friction coupler disposed between the plurality of the intermediate plates.

According to this configuration, since the plurality of intermediate plates are provided, the number of friction couplers (the number of friction surfaces) can be increased. Therefore, even if the same diameter size is used, a transmission torque can be improved for the clutch.

In the multi-plate clutch according to the aspect of this disclosure, a flywheel ring may be mounted on the flywheel, and the other end portion of the first elastic portion may be fixed to the flywheel via the flywheel ring.

According to this configuration, since the flywheel ring is provided, a structure for fixing the other end portion of the first elastic portion may be disposed in the flywheel ring (the structure does not need to be disposed in the flywheel). Therefore, the multi-plate clutch can be more freely designed.

According to the aspect of this disclosure, it is possible to reduce the number of components, and it is possible to improve assembly workability.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a longitudinal sectional view of a multi-plate clutch according to a first embodiment disclosed here;
Fig. 2 is a plan view of the multi-plate clutch according to the first embodiment disclosed here;
Fig. 3 is an enlarged sectional view of a main section of the multi-plate clutch according to the first embodiment disclosed here;
Fig. 4 is a plan view of a main section of the multi-plate clutch according to the first embodiment disclosed here;
Fig. 5 is a side view of a main section of the multi-plate clutch according to the first embodiment disclosed here;
Fig. 6 is a plan view of an elastic member according to the first embodiment disclosed here;
Fig. 7 is a side view of the elastic member according to the first embodiment disclosed here;
Fig. 8 is an enlarged sectional view of a main section of a modification example of the multi-plate clutch according to the first embodiment disclosed here;
Fig. 9 is a longitudinal sectional view of a multi-plate clutch according to a second embodiment disclosed here;
Fig. 10 is an enlarged sectional view of a main section of the multi-plate clutch according to the second embodiment disclosed here;
Fig. 11 is a plan view of a main section of the multi-plate clutch according to the second embodiment disclosed here;
Fig. 12 is a side view of a main section of the multi-plate clutch according to the second embodiment disclosed here;
Fig. 13 is a longitudinal sectional view of a modification example of the multi-plate clutch according to the second embodiment disclosed here;
Fig. 14 is a plan view of Modification Example 1 of the elastic member according to the embodiment disclosed here;
Fig. 15 is a plan view of Modification Example 2 of the elastic member according to the embodiment disclosed here;
Fig. 16 is a plan view of Modification Example 3 of the elastic member according to the embodiment disclosed here; and
Fig. 17 is a side view of Modification Example 3 of the elastic member according to the embodiment disclosed here.

### DETAILED DESCRIPTION

Hereinafter, a multi-plate clutch according to embodiments disclosed here will be described with reference to the drawings. In the embodiments disclosed here, a case of the multi-plate clutch used for a vehicle clutch will be described as an example.

### First Embodiment

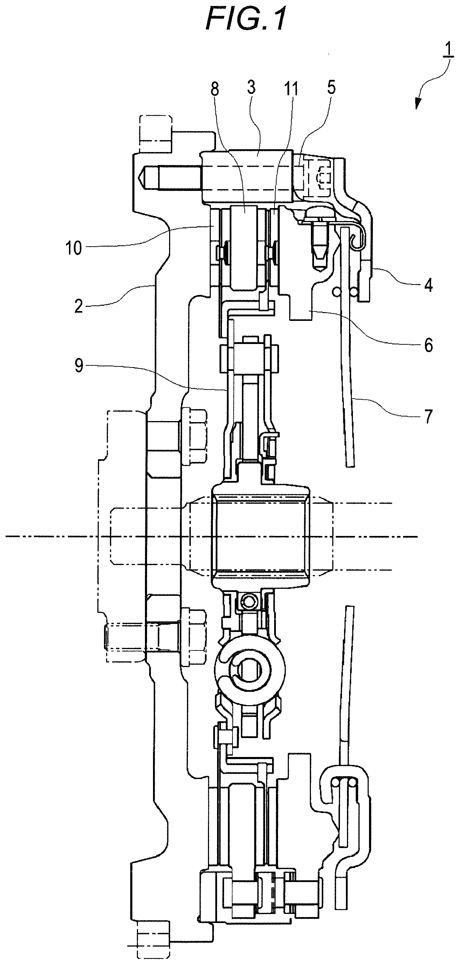

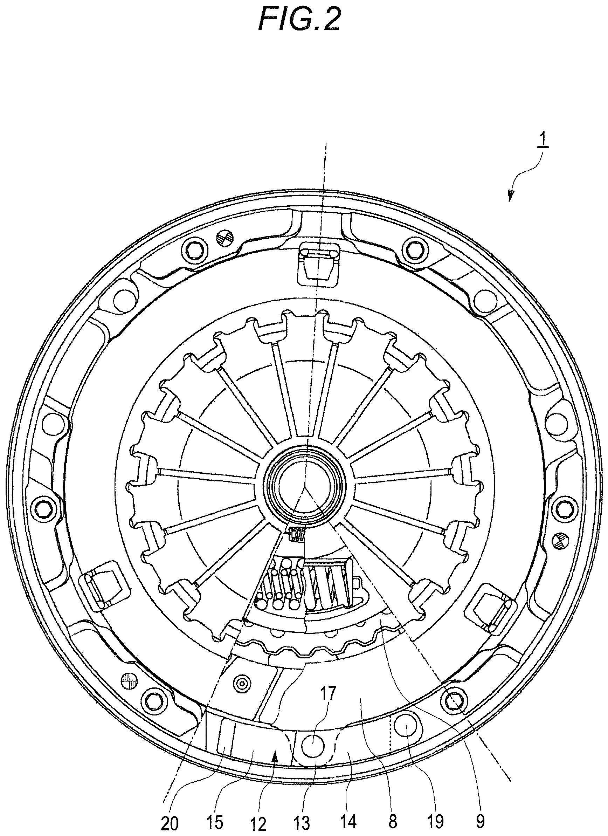

A configuration of the multi-plate clutch according to a first embodiment disclosed here will be described with reference to the drawings. Fig. 1 is a longitudinal sectional view illustrating the overall multi-plate clutch according to the embodiment disclosed here. Fig. 2 is a plan view illustrating the overall multi-plate clutch according to the embodiment disclosed here. As illustrated in Figs. 1 and 2, a multi-plate clutch 1 includes a flywheel 2 connected to an output shaft (not illustrated) of an engine, a flywheel ring 3 mounted on the flywheel 2, and a clutch cover 4 mounted on the flywheel ring 3. The flywheel ring 3 is fixed to the flywheel 2 by a bolt 5. The flywheel ring 3 and the flywheel 2 can be regarded as an integral member. A pressure plate 6 is disposed between the flywheel 2 and the clutch cover 4. The pressure plate 6 is biased to the flywheel 2 side (left side in Fig. 1) by a diaphragm spring 7 serving as a biasing member.

An intermediate plate 8 is disposed between the flywheel 2 and the pressure plate 6. A first friction coupler 10 of a clutch disc 9 is disposed between the flywheel 2 and the intermediate plate 8. A second friction coupler 11 of the clutch disc 9 is disposed between the intermediate plate 8 and the pressure plate 6. The multi-plate clutch 1 includes two friction couplers (the first friction coupler 10 and the second friction coupler 11), and thus, can be called a twin clutch.

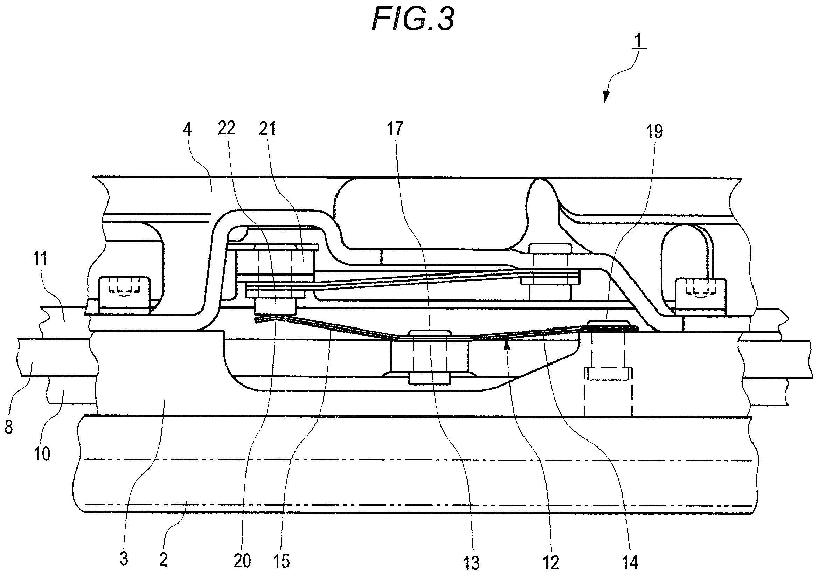

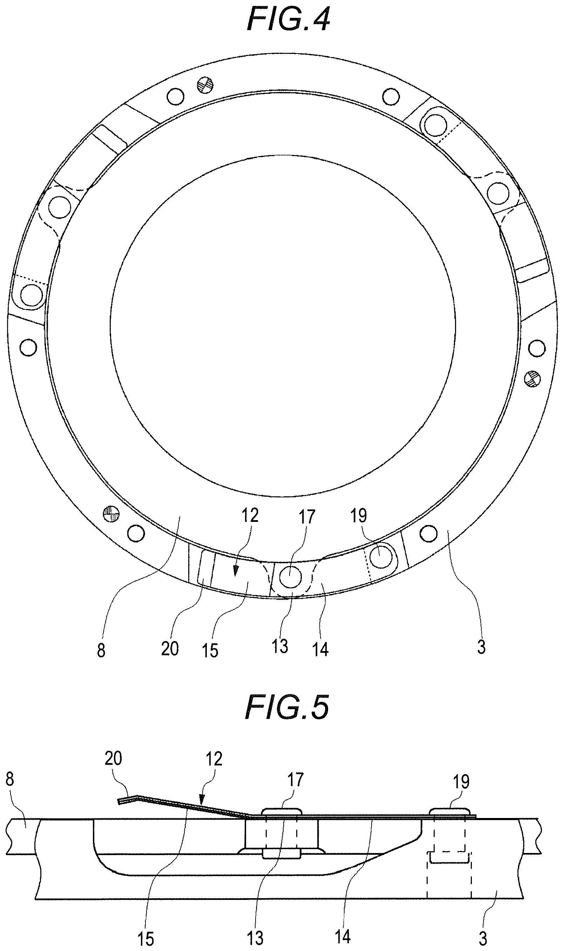

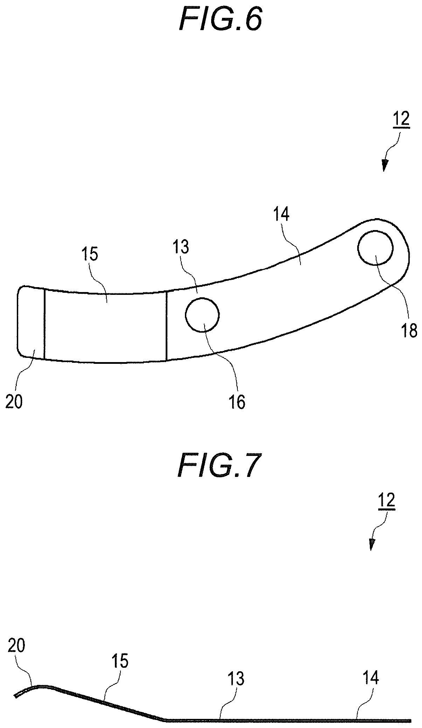

Fig. 3 is an enlarged sectional view for describing a main section of the multi-plate clutch 1 according to the embodiment disclosed here. Fig. 4 is a plan view of a main section of the multi-plate clutch 1. Fig. 5 is a side view of a main section of the multi-plate clutch 1. Fig. 6 is a plan view of an elastic member. Fig. 7 is a side view of the elastic member. As illustrated in Figs. 3 to 5, a leaf spring 12 serving as an elastic member is mounted on the intermediate plate 8. The leaf spring 12 includes a central portion 13 fixed to the intermediate plate 8, and two elastic portions (a first elastic portion 14 and a second elastic portion 15) extending to both sides from the central portion 13 (refer to Figs. 6 and 7). In this case, the leaf spring 12 has an arch shape as a whole (arc shape along the flywheel ring 3). In a natural state before the leaf spring 12 is mounted thereon (state where a load is not applied), the first elastic portion 14 is configured to extend straight from the central portion 13, and the second elastic portion 15 is configured to extend while being bent in one direction (direction of the pressure plate 6 when mounted, upward direction in Fig. 7) from the central portion 13. Materials of the first elastic portion 14 and the second elastic portion 15 are the same as each other. A rivet hole 16 is disposed in the central portion 13 of the leaf spring 12. The central portion 13 of the leaf spring 12 is fixed to the intermediate plate 8 via the rivet hole 16 by using a rivet 17. The central portion 13 of the leaf spring 12 is one end portion of the elastic portions (the first elastic portion 14 and the second elastic portion 15).

One end portion (the central portion 13 of the elastic member) of the first elastic portion 14 is fixed to the intermediate plate 8 by using the rivet 17. A rivet hole 18 is disposed in the other end portion of the first elastic portion 14. The other end portion of the first elastic portion 14 is fixed to the flywheel ring 3 via the rivet hole 18 by using a rivet 19. In this case, in a state where pressure is applied, the first elastic portion 14 is mounted between the intermediate plate 8 and the flywheel ring 3. Specifically, the pressure is applied to the first elastic portion 14 such that an elastic biasing force acting in a direction away from the flywheel 2 (upward direction in Fig. 3) is applied to the intermediate plate 8. As described above, the flywheel ring 3 is fixed to the flywheel 2 by the bolt 5. Therefore, the other end portion of the first elastic portion 14 is fixed to the flywheel 2 via the flywheel ring 3.

One end portion (the central portion 13 of the elastic member) of the second elastic portion 15 is fixed to the intermediate plate 8 by the rivet 17. A contact portion 20 is disposed in the other end portion of the second elastic portion 15. The contact portion 20 is in contact with a rivet 22 of a boss portion 21 of the pressure plate 6. In this case, in a state where pressure is applied, the second elastic portion 15 is mounted between the intermediate plate 8 and the pressure plate 6. Specifically, the pressure is applied to the second elastic portion 15 such that the elastic biasing force acting in a direction approaching the flywheel 2 (downward direction in Fig. 3) is applied to the intermediate plate 8.

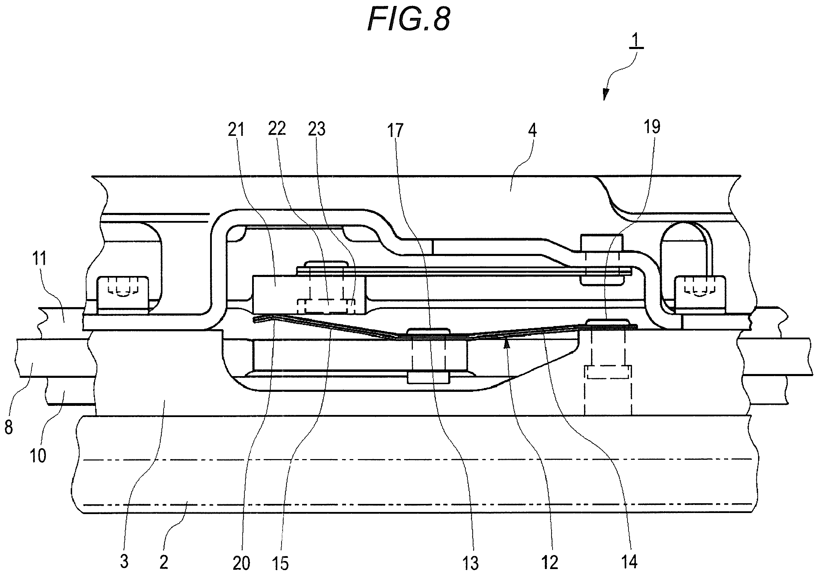

As illustrated in Fig. 8, a recess 23 (counterbore) for accommodating the rivet 22 may be disposed in the boss portion 21 of the pressure plate 6. The contact portion 20 of the other end portion of the second elastic portion 15 may be directly in contact with the boss portion 21 of the pressure plate 6.

According to this multi-plate clutch 1 in the first embodiment, the two elastic portions (the first elastic portion 14 and the second elastic portion 15) are disposed in the leaf spring 12 serving as a single elastic member. In a state where the clutch is disengaged, the elastic biasing force acting in the direction away from the flywheel 2 is applied to the intermediate plate 8 from the first elastic portion 14 of the leaf spring 12. The elastic biasing force acting in the direction approaching the flywheel 2 is applied to the intermediate plate 8 from the second elastic portion 15 of the leaf spring 12. In this way, the single elastic member (the leaf spring 12) enables a position of the intermediate plate 8 to be held at an intermediate position between the flywheel 2 and the pressure plate 6. Accordingly, it is possible to prevent a drag torque from being generated. Therefore, compared to a case of using two different elastic members (a strap plate and a coil spring) as in the related art, the number of components can be reduced, and assembly workability is improved.

According to the embodiment disclosed here, the first elastic portion 14 and the second elastic portion 15 have the same material. Accordingly, there is no difference caused by thermal influence (setting difference or elastic property difference). Therefore, even in an environment having a thermal change, the position of the intermediate plate 8 can be held at the intermediate position between the flywheel 2 and the pressure plate 6. Accordingly, it is possible to prevent the drag torque from being generated.

According to the embodiment disclosed here, the elastic member is configured to include the leaf spring 12. In this manner, compared to a case where the elastic member is configured to include the coil spring, it is possible to shorten a dimension in an axial direction of the multi-plate clutch 1. Therefore, the number of friction surfaces can be increased, and torque capacity can be enlarged even in a limited clutch space.

According to the embodiment disclosed here, since the flywheel ring 3 is provided, a structure for fixing the other end portion of the first elastic portion 14 may be disposed in the flywheel ring 3 (the structure does not need to be disposed in the flywheel 2). Therefore, the multi-plate clutch 1 can be more freely designed.

### Second Embodiment

Next, the multi-plate clutch 1 according to a second embodiment disclosed here will be described. Here, a different point of the multi-plate clutch 1 between the second embodiment and the first embodiment will be mainly described. Here, unless otherwise described, a configuration and an operation according to the second embodiment are the same as those according to the first embodiment.

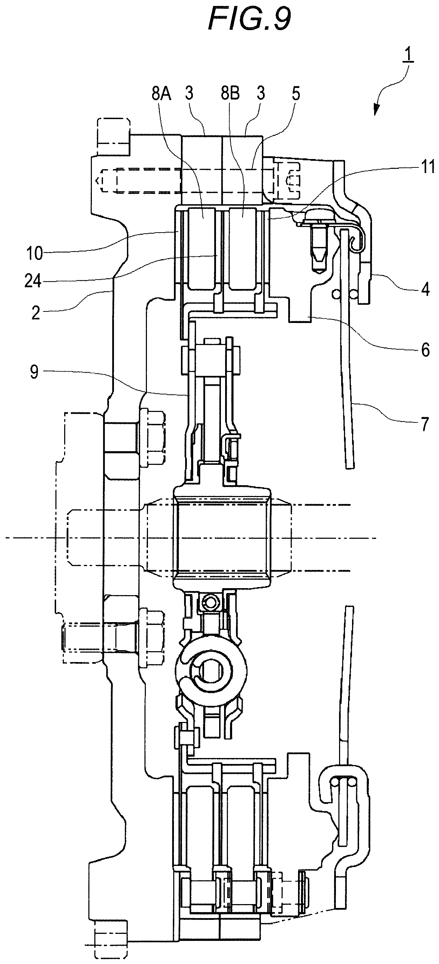

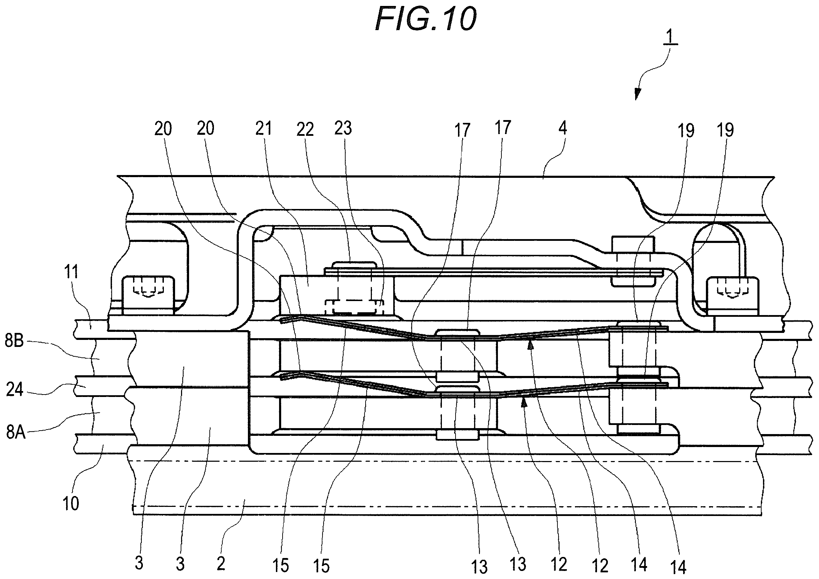

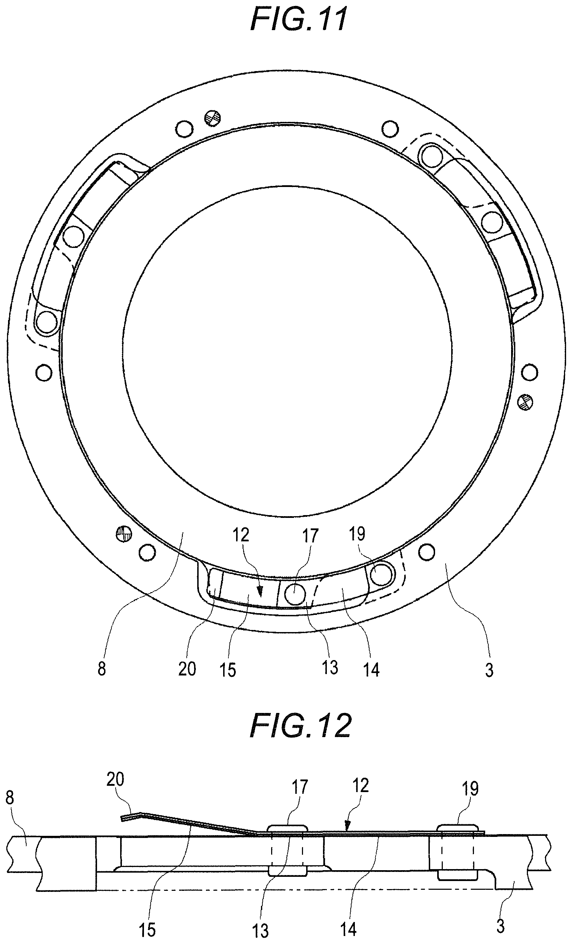

Fig. 9 is a longitudinal sectional view illustrating the overall multi-plate clutch 1 according to the embodiment disclosed here. Fig. 10 is an enlarged sectional view for describing a main section of the multi-plate clutch 1 according to the embodiment disclosed here. Fig. 11 is a plan view of a main section of the multi-plate clutch 1. Fig. 12 is a side view of a main section of the multi-plate clutch 1. As illustrated in Figs. 9 to 12, in the multi-plate clutch 1 according to the embodiment disclosed here, two intermediate plates (a first intermediate plate 8A and a second intermediate plate 8B) are disposed between the flywheel 2 and the pressure plate 6. A third friction coupler 24 of the clutch disc 9 is disposed between the first intermediate plate 8Aand the second intermediate plate 8B. The first friction coupler 10 of the clutch disc 9 is disposed between the flywheel 2 and the first intermediate plate 8A. The second friction coupler 11 of the clutch disc 9 is disposed between the second intermediate plate 8B and the pressure plate 6.

According to this multi-plate clutch 1 in the second embodiment, it is also possible to achieve the same operation effect as that according to the first embodiment.

Moreover, according to the embodiment disclosed here, since the two intermediate plates (the first intermediate plate 8A and the second intermediate plate 8B) are provided, the number of friction couplers (the number of friction surfaces) can be increased. Therefore, even if the same diameter size is used, a transmission torque can be improved for the clutch.

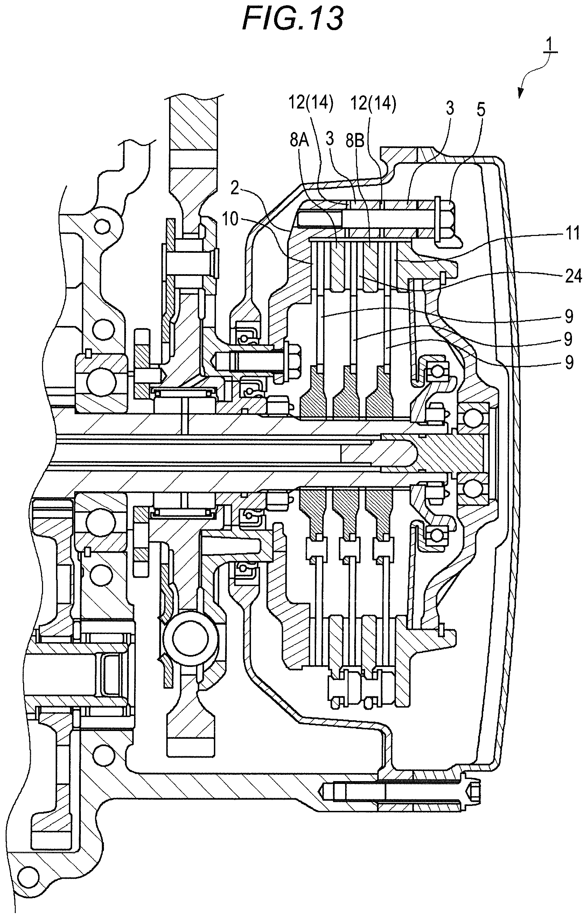

Here, a case has been described where the two intermediate plates 8A and 8B are provided. However, the number of intermediate plates is not limited thereto. Three or more intermediate plates may be provided. As illustrated in Fig. 13, the other end portion of the first elastic portion 14 of the leaf spring 12 may be fixed to the flywheel ring 3 by using the bolt 5 for fixing the flywheel ring 3 to the flywheel 2.

Hitherto, the embodiments according to this disclosure have been described as an example. The scope of this disclosure is not limited thereto, and can be changed or modified in compliance with the object within the scope disclosed in the appended claims.

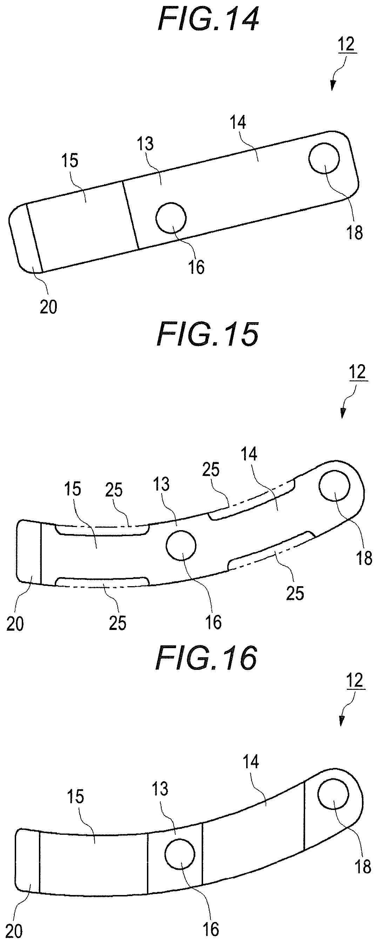

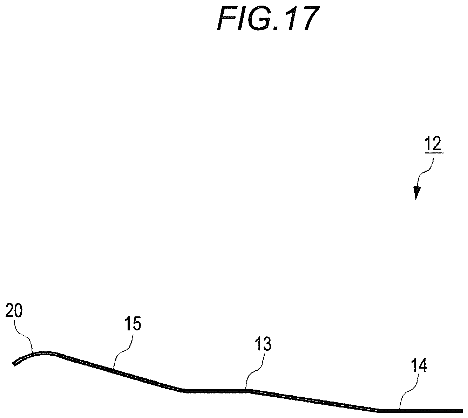

The leaf spring 12 may not necessarily have the arc shape (arc shape along the flywheel ring 3). For example, as illustrated in Fig. 14, the leaf spring 12 may have a linear shape. As illustrated in Fig. 15, the first elastic portion 14 and the second elastic portion 15 of the leaf spring 12 may have a narrow width shape which has a concavely thinned portion 25 on both sides. Furthermore, as illustrated in Figs. 16 and 17, the leaf spring 12 may be configured such that in a natural state before the leaf spring 12 is mounted thereon (state where a load is not applied), the first elastic portion 14 extends while being bent in one direction (direction of the flywheel 2 when mounted, downward direction in Fig. 17) from the central portion 13, and that the second elastic portion 15 extends while being bent in the other direction (direction of the pressure plate 6 when mounted, upward direction in Fig. 17) from the central portion 13.

As described above, the multi-plate clutch according to the aspect of this disclosure is effectively used for a vehicle clutch, since there is an advantageous effect in that the number of components can be reduced, and assembly workability can be improved.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive.

## Claims

1. A multi-plate clutch (1) comprising:
a flywheel (2);
a pressure plate (6) that is biased to the flywheel side by a biasing member (7);
an intermediate plate (8) that is disposed between the flywheel and the pressure plate; and
a clutch disc (9) that has a first friction coupler (10) disposed between the flywheel and the intermediate plate, and a second friction coupler (11) disposed between the intermediate plate and the pressure plate,
wherein an elastic member (12) having a first elastic portion (14) and a second elastic portion (15) is mounted on the intermediate plate,
wherein the first elastic portion is configured such that one end portion is fixed to the intermediate plate, that the other end portion is fixed to the flywheel, and that an elastic biasing force acting in a direction away from the flywheel is applied to the intermediate plate, and
wherein the second elastic portion is configured such that one end portion is fixed to the intermediate plate, that the other end portion is in contact with the pressure plate, and that an elastic biasing force acting in a direction approaching the flywheel is applied to the intermediate plate, **characterized in that**
the elastic member is fixed at two points by using rivets (17, 19), wherein the one end portion of the second elastic portion (15) is fixed to the intermediate plate (8) by one of the rivets (17), and
a contact portion (20) is disposed at the other end portion of the second elastic portion (15), the contact portion (20) being in contact with a boss portion (21) of the pressure plate (6) or with a rivet (22) of the boss portion (21).

2. The multi-plate clutch according to claim 1,
wherein materials of the first elastic portion and the second elastic portion are the same as each other.

3. The multi-plate clutch according to claim 1 or 2,
wherein the elastic member is configured to include a leaf spring.

4. The multi-plate clutch according to any one of claims 1 to 3,
wherein a plurality of the intermediate plates are disposed between the flywheel and the pressure plate, and
wherein the clutch disc has a third friction coupler (24) disposed between the plurality of the intermediate plates.

5. The multi-plate clutch according to any one of claims 1 to 4,
wherein a flywheel ring (3) is mounted on the flywheel, and
wherein the other end portion of the first elastic portion is fixed to the flywheel via the flywheel ring.

## Patentansprüche

1. Mehrscheibenkupplung (1) mit:
einem Schwungrad (2);
einer Druckplatte (6), die auf die Schwungradseite durch ein Vorspannbauteil (7) vorgespannt wird;
einer Zwischenplatte (8), die zwischen dem Schwungrad und der Druckplatte angeordnet ist; und
einer Kupplungsscheibe (9), die einen ersten Reibungskoppler (10), der zwischen dem Schwungrad und der Zwischenplatte angeordnet ist, und einen zweiten Reibungskoppler (11), der zwischen der Zwischenplatte und der Druckplatte angeordnet ist, aufweist,
bei der ein elastisches Bauteil (12), das einen ersten elastischen Abschnitt (14) und einen zweiten elastischen Abschnitt (15) aufweist, auf der Zwischenplatte montiert ist,
bei der der erste elastische Abschnitt derart ausgebildet ist, dass ein Endabschnitt an der Zwischenplatte befestigt ist, dass der andere Endabschnitt an dem Schwungrad befestigt ist, und
dass eine Elastizitätsvorspannkraft, die in einer Richtung weg von dem Schwungrad wirkt, auf die Zwischenplatte ausgeübt wird, und
bei der der zweite elastische Abschnitt derart ausgebildet ist, dass ein Endabschnitt an der Zwischenplatte befestigt ist, dass der andere Endabschnitt in Kontakt mit der Druckplatte ist, und das eine Elastizitätsvorspannkraft, die in einer Richtung, die sich dem Schwungrad nähert, wirkt, auf die Zwischenplatte ausgeübt wird, **dadurch gekennzeichnet, dass**
das elastische Bauteil an zwei Punkten unter Verwendung von Nieten (17, 19) befestigt ist, bei der der eine Endabschnitt des zweiten elastischen Abschnitts (15) an der Zwischenplatte (8) durch einen der Niete (17) befestigt ist, und
ein Kontaktabschnitt (20) an dem anderen Endabschnitt des zweiten elastischen Abschnitts (15) angeordnet ist, welcher Kontaktabschnitt (20) in Kontakt mit einem Vorsprungabschnitt (21) der Druckplatte (6) oder mit einem Niet (22) des Vorsprungabschnitts (21) ist.

2. Mehrscheibenkupplung nach Anspruch 1,
bei der Materialien des ersten elastischen Abschnitts und des zweiten elastischen Abschnitts dieselben sind.

3. Mehrscheibenkupplung nach Anspruch 1 oder 2,
bei der das elastische Bauteil dazu ausgebildet ist, eine Blattfeder aufzuweisen.

4. Mehrscheibenkupplung nach einem der Ansprüche 1 bis 3,
bei der eine Mehrzahl der Zwischenplatten zwischen dem Schwungrad und der Druckplatte angeordnet ist, und
bei der die Kupplungsscheibe einen dritten Reibungskoppler (24), der zwischen der Mehrzahl der Zwischenplatten angeordnet ist, aufweist.

5. Mehrscheibenkupplung nach einem der Ansprüche 1 bis 4,
bei der ein Schwungradring (3) auf dem Schwungrad montiert ist, und
bei der der andere Endabschnitt des ersten elastischen Abschnitts an dem Schwungrad über den Schwungradring befestigt ist.

## Revendications

1. Embrayage multi-plaque (1) comprenant :
un volant d'inertie (2) ;
une plaque de pression (6) qui est précontrainte vers le côté du volant d'inertie par un élément de précontrainte (7) ;
une plaque intermédiaire (8) qui est disposée entre le volant d'inertie et la plaque de pression ; et
un disque d'embrayage (9) qui comporte un premier coupleur à friction (10) disposé entre le volant d'inertie et la plaque intermédiaire, et un second coupleur à friction (11) disposé entre la plaque intermédiaire et la plaque de pression,
dans lequel un élément élastique (12) ayant une première partie élastique (14) et une seconde partie élastique (15) est monté sur la plaque intermédiaire,
dans lequel la première partie élastique est configurée de telle sorte qu'une partie d'extrémité est fixée à la plaque intermédiaire, que l'autre partie d'extrémité est fixée au volant d'inertie, et qu'une force élastique de précontrainte agissant dans une direction s'écartant du volant d'inertie est appliquée sur la plaque intermédiaire, et
dans lequel la seconde partie élastique est configurée de telle sorte qu'une partie d'extrémité est fixée à la plaque intermédiaire, que l'autre partie d'extrémité est en contact avec la plaque de pression, et qu'une force élastique de précontrainte agissant dans une direction s'approchant du volant d'inertie est appliquée sur la plaque intermédiaire, **caractérisé en ce que**
l'élément élastique est fixé en deux points au moyen de rivets (17, 19), où ladite partie d'extrémité de la seconde partie élastique (15) est fixée sur la plaque intermédiaire (8) par un des rivets (17), et
une partie de contact (20) est disposée à l'autre partie d'extrémité de la seconde partie élastique (15), la partie de contact (20) étant en contact avec une partie de bossage (21) de la plaque de pression (6) ou avec un rivet (22) de la partie de bossage (21).

2. Embrayage multi-plaque selon la revendication 1,
dans lequel les matériaux de la première partie élastique et de la seconde partie élastique sont identiques l'un à l'autre.

3. Embrayage multi-plaque selon la revendication 1 ou 2,
dans lequel l'élément élastique est configuré pour inclure un ressort à lames.

4. Embrayage multi-plaque selon l'une quelconque des revendications 1 à 3,
dans lequel une pluralité des plaques intermédiaires sont disposées entre le volant d'inertie et la plaque de pression, et
dans lequel le disque d'embrayage comporte un troisième coupleur à friction (24) disposé entre la pluralité des plaques intermédiaires.

5. Embrayage multi-plaque selon l'une quelconque des revendications 1 à 4,
dans lequel une bague de volant d'inertie (3) est montée sur le volant d'inertie, et
dans lequel l'autre partie d'extrémité de la première partie élastique est fixée au volant d'inertie via la bague de volant de volant d'inertie.
